# EUROPÄISCHE PATENTSCHRIFT

(11) **EP 3 125 053 B1**
(45) Veröffentlichungstag und Bekanntmachung des Hinweises auf die Patenterteilung: **26.07.2017**
(21) Anmeldenummer: 15179422.9
(22) Anmeldetag: 31.07.2015
(51) Int. Cl.: G05B 19/042

(54) **VERFAHREN UND PERIPHERIEBAUGRUPPE ZUR ÜBERTRAGUNG VON HART-VARIABLEN SOWIE CPU-EINHEIT ZUM LESEN DER HART-VARIABLEN**
METHOD AND PERIPHERAL MODULE FOR THE TRANSMISSION OF HART VARIABLES AND CPU UNIT FOR READING THE HART VARIABLES
PROCEDE ET COMPOSANT PERIPHERIQUE DESTINES A LA TRANSMISSION DE VARIABLES HART ET UNITE CENTRALE DESTINEE A LIRE LES VARIABLES HART

(43) Veröffentlichungstag der Anmeldung: 01.02.2017
(73) Patentinhaber: Siemens Aktiengesellschaft, 80333 München (DE)
(72) Erfinder: Langolf, Carsten, 76829 Landau (DE); Rottmann, Norbert, 76829 Landau (DE)

(56) Entgegenhaltungen:
- US-A1- 2008 141 271

## Beschreibung

Die Erfindung betrifft ein Verfahren nach dem Oberbegriff des Anspruchs 1.

Die Erfindung betrifft ferner eine Peripheriebaugruppe nach dem Oberbegriff des Anspruchs 6.

Die Erfindung betrifft außerdem eine CPU-Einheit zum Lesen der HART-Variablen aus einer solchen Peripheriebaugruppe.

Prozessleitsysteme dienen zur Automatisierung von Prozessen in technischen Anlagen. Bei den automatisierten Prozessen kann es sich beispielsweise um verfahrens- oder fertigungstechnische Prozesse oder Prozesse zur Erzeugung oder Verteilung von elektrischer Energie handeln.

Prozessleitsysteme, wie z. B. PCS 7 von Siemens, sind üblicherweise hierarchisch durch mehrere Ebenen strukturiert. Auf der Feldebene werden mittels Feldgeräten die Zustände des technischen Prozesses erfasst (Sensoren) bzw. der Prozess gezielt beeinflusst (Aktoren). In der Steuerungsebene führen CPU-Einheiten als Bestandteile speicherprogrammierbarer Steuerungen feldnahe Steuerungs- und Regelungsfunktionen möglichst in Echtzeit und somit kalkulierbar aus, wobei sie Signale von den Sensoren, z. B. von einem Druckmessumformer, empfangen und Befehle an die Aktoren, z. B. einen Stellungsregler für ein Regelventil, abgeben. Auf der Prozessführungsebene findet in Leitrechnern die übergeordnete Steuerung und Regelung statt, wobei ein aus einer oder mehreren Operatorstationen bestehendes Operatorsystem das Bedienen und Beobachten des Prozesses durch das Bedienpersonal der Anlage ermöglicht.

Der Datenaustausch zwischen den Feldgeräten und den CPU-Einheiten erfolgt üblicherweise über einen digitalen Feldbus, wie z. B. PROFIBUS DP oder PROFINET. Da die Feldgeräte normalerweise selbst keinen entsprechenden Feldbusanschluss aufweisen, werden sie über dezentrale Peripheriestationen an den digitalen Feldbus angebunden. Eine Peripheriestation besteht aus einem Interfacemodul (Kopfbaugruppe) zum Anschluss an den digitalen Feldbus und einer Anzahl von Peripheriebaugruppen (digitale und analoge Ein- und Ausgabebaugruppen) zum Anschluss der Feldgeräte. Jede Peripheriebaugruppe weist einen oder mehrere Kanäle auf, wobei an jedem Kanal jeweils ein Feldgerät angeschlossen werden kann.

Aus der US 2008/0141271 A1 ist eine Perpheriestation (electronic control system) für ein Prozessleitsystem (SCADA-System) bekannt, die mindestens ein Ein-/Ausgabe (I/O) -Modul zum Anschluss von elektronischen Geräten, z. B. Sensoren, und eine Verarbeitungseinheit (processing unit) zum Anschluss an einen Server des SCADA-Systems aufweist. Der Datenaustausch zwischen dem mindestens einen I/O-Modul und der Verarbeitungseinheit erfolgt durch einen Prozessor gesteuert in einer Datenübertragungsstruktur (data messaging structure), die die Übertragung unterschiedlicher Datentypen ermöglicht.

Ein weit verbreitetes Kommunikationsprotokoll für Feldgeräte ist HART (Highway Addressable Remote Transducer), bei dem der Haupt-Prozesswert, z. B. ein Druckmesswert, als analoges 4-20 mA Stromsignal übertragen wird, dem weitere Daten (sog. HART-Variablen, z. B. die Temperatur des Drucksensors) über Frequency Shift Keying (FSK) aufmoduliert und digital übertragen werden können. In diesem Fall setzt die Peripheriebaugruppe z. B. ein 4-20 mA Messsignal aus dem Prozess in ein geeignetes digitales Datenformat für die CPU-Einheit um bzw. wandelt einen digitalen Ausgabewert in ein analoges Stellsignal für den Prozess um.

Zur Ausführung der feldnahen Steuerungs- und Regelungsfunktionen werden in den CPU-Einheiten Automatisierungsprogramme zyklisch abgearbeitet. Wenn dabei Daten aus dem Prozess verarbeitet werden, greift das Programm üblicherweise auf ein Prozessabbild der Eingänge zu, in das zu Beginn des Zyklus alle Daten der Eingabebaugruppen auf einmal eingelesen und abgelegt werden. Bei der Abarbeitung des Programms werden die Ergebnisse in das Prozessabbild der Ausgänge geschrieben und von dort nach Abarbeitung des Programms in die Ausgabebaugruppen übertragen. Jede Peripheriebaugruppe weist dementsprechend einen Adressraum (Nutzdatenbereich) mit einen Eingangs- und/oder Ausgangsbereich für seine Ein- und Ausgangsdaten auf, wobei die in dem Eingangsbereich bereitgestellten Eingangsdaten von der Peripheriebaugruppe laufend aktualisiert werden. Die Größe des Adressraumes ist begrenzt.

Ein HART-Feldgerät kann zusätzlich zu dem digitalisierten 4-20 mA Haupt-Prozesswert bis zu vier HART-Variablen zur Verfügung stellen. Jede HART-Variable besteht aus einem 4 Byte Wert und einem 1 Byte Quality-Code, belegt also 5 Byte. Eine kanalgranular realisierte HART-Peripheriebaugruppe ermöglicht beispielsweise den Anschluss von 16 HART-Feldgeräten, so dass die HART-Peripheriebaugruppe im Betrieb ständig bis zu 64 HART-Variablen mit 320 Byte zur Auswertung durch die zugeordnete CPU-Einheit bereitstellen muss. Hinzu kommen die 16 analogen Haupt-Prozesswerte, die jeweils mit z. B. 2 Byte dargestellt werden und so noch mal 32 Byte beanspruchen. Dem steht in jeder Peripheriebaugruppe ein Adressraum für die komplette Prozessbearbeitung von üblicherweise lediglich 16 oder 32 Byte gegenüber, was die Anzahl der in den Adressraum der Peripheriebaugruppe projektierbaren (mappbaren) HART-Variablen stark begrenzt. In dem Prozessleitsystem ist es oft notwendig einen Zugriff auf alle von ihr zur Verfügung gestellten HART-Variablen zu ermöglichen. Eine Umparametrierung, also eine Änderung der Mappingvorschrift ist während der Laufzeit der CPU-Einheit nicht zulässig und im Übrigen nicht gewünscht, weil dies zu einem Stopp der Anlage führen kann. Ebenso ist es nicht gewünscht, dass HART-Variablen über sogenannte Datensätze (größere zusammenhängende Datenpakete) zur Prozesssteuerung von einer Peripheriebaugruppe gelesen werden, da diese asynchronen Transportdienste zeitlich nicht kalkulierbar sind und üblicherweise nicht mehrere Peripheriebaugruppen gleichzeitig ansprechbar sind. Der Anwender muss daher im Voraus festlegen, welche HART-Variablen er für seine Automatisierungslösung im Adressraum der Peripheriebaugruppe benötigt.

Grundsätzlich kann das beschriebene Problem durch Erweiterung des Adressbereichs der Peripheriebaugruppe gelöst werden. Jedoch besteht eine weitere Einschränkung bei dem zyklisch erfolgenden Datenaustausch zwischen dem Interfacemodul und der CPU-Einheit. So kann z. B. ein PROFINET-Telegramm bis zu 1440 Byte Prozessdaten transportieren. Dem stehen aber z. B. bei 56 HART-Peripheriebaugruppen in einer Peripheriestation mit jeweils 16 Kanälen 56 x 16 x 4 x 5 = 17920 Byte zu übertragende HART-Variablen gegenüber.

Der Erfindung liegt daher die Aufgabe zugrunde, auf einfache Weise bzw. mit einfachen Mitteln die Übertragung aller potentiell verfügbaren HART-Variablen zu ermöglichen.

Gemäß der Erfindung wird die Aufgabe durch das in Anspruch 1 angegebene Verfahren und die in Anspruch 6 angegebene Peripheriebaugruppe gelöst.

Gegenstand der Erfindung ist somit ein Verfahren zur Übertragung unterschiedlicher HART-Variablen aus einer zum Anschluss von HART-Feldgeräten dienenden Peripheriebaugruppe in eine CPU-Einheit einer speicherprogrammierbaren Steuerung, wobei die Peripheriebaugruppe einen Adressraum mit einem Eingangsbereich und einem Ausgangsbereich aufweist und in dem Eingangsbereich die HART-Variablen bereitstellt, welche von der Peripheriebaugruppe laufend aktualisiert und von der CPU-Einheit zyklisch gelesen werden, dadurch gekennzeichnet, dass in dem Ein- und Ausgangsbereich des Adressraums ein Kommunikationsbereich für die Übertragung einer einzelnen HART-Variablen vorgesehen wird, wobei die CPU-Einheit in den Ausgangsbereich des Kommunikationsbereichs ein Kommando schreibt, das die aktuell zu lesende HART-Variable spezifiziert, und dass die Peripheriebaugruppe die spezifizierte HART-Variable solange in dem Eingangsbereich des Kommunikationsbereichs bereitstellt und aktualisiert, bis die CPU-Einheit in den Ausgangsbereich ein neues Kommando schreibt, welches eine andere zu lesende HART-Variable spezifiziert.

Gegenstand der Erfindung ist ferner eine Peripheriebaugruppe zum Anschluss von HART-Feldgeräten und zur Übertragung unterschiedlicher HART-Variablen in eine CPU-Einheit einer speicherprogrammierbaren Steuerung, wobei die Peripheriebaugruppe einen Adressraum mit einem Eingangsbereich und einem Ausgangsbereich aufweist und dazu ausgebildet ist, die HART-Variablen in dem Eingangsbereich eines Adressraumes zum zyklisehen Lesen durch die CPU-Einheit bereitzustellen und laufend zu aktualisieren, dadurch gekennzeichnet, dass in dem Ein- und Ausgangsbereich des Adressraums ein Kommunikationsbereich für die Übertragung einer einzelnen HART-Variablen vorgesehen ist und dass die Peripheriebaugruppe ferner dazu ausgebildet ist, in dem Ausgangsbereich des Kommunikationsbereichs ein die aktuell zu lesende HART-Variable spezifizierendes Kommando der CPU-Einheit zu empfangen und die jeweils spezifizierte HART-Variable solange in dem Eingangsbereich des Kommunikationsbereichs bereitzustellen und zu aktualisieren, bis sie in dem Ausgangsbereich ein neues Kommando empfängt, welches eine andere zu lesenden HART-Variable spezifiziert.

Das Kommando umfasst eine Kennzeichnung der zu lesenden HART-Variablen (Variablen-ID) und bei mehrkanaliger Ausbildung der Peripheriebaugruppe auch eine Kennzeichnung des Kanals (Kanalnummer), der die HART-Variable liefert.

Die von der CPU-Einheit jeweils zu lesende HART-Variable wird vorzugsweise zusammen mit einer dem Kommando entsprechenden Quittung in dem Eingangsbereich des Kommunikationsbereichs bereitgestellt, so dass die CPU-Einheit die Richtigkeit der gelesenen HART-Variablen feststellen kann.

Wenn die CPU-Einheit mit einem neuen Kommando eine neue HART-Variable anfordert, wird die aktuelle Quittung im Eingangsbereich des Kommunikationsbereichs der Peripheriebaugruppe auf einen Wert gesetzt, der die aktuell bereitgestellte HART-Variable so lange als ungültig kennzeichnet, bis die neue HART-Variable mit der zugehörigen Quittung bereitgestellt ist.

Da die bereitgestellte HART-Variable (4 Byte Wert und 1 Byte Quality-Code) und die Quittung (1 Byte) zusammen nur 6 Bytes benötigen, können je nach Größe des Adressbereichs der Peripheriebaugruppe auch zwei oder mehrere Kommunikationsbereiche realisiert und somit gleichzeitig unterschiedliche HART-Variablen bereitgestellt werden, die unabhängig voneinander durch Kommandos in dem Ausgangsbereich spezifiziert werden. Die unterschiedlichen gleichzeitig bereitgestellten HART-Variablen werden zyklisch zusammen in einem Telegramm an die CPU-Einheit übertragen.

Durch die Erfindung wird ein Zugriff auf alle HART-Variablen einer Peripheriebaugruppe ermöglicht, der unabhängig von einer Parametrierung der Peripheriebaugruppe ist. D. h., der Anwender ist nicht mehr gezwungen, durch Parametrierung festzulegen, welche HART-Variablen er für seine Automatisierungslösung benötigt. Über den Adressraum der Peripheriebaugruppe wird nach wie vor das Prozessabbild der jeweils aktuellen Eingänge und Ausgänge bereitgestellt.

Wie auch bisher wird in der CPU-Einheit die Peripherieanbindung vorzugsweise durch Kanalbausteine (Treiber) abstrahiert. Dabei repräsentiert im Rahmen der Erfindung ein Kanalbaustein in vorteilhafter Weise eine vorgegebe Anzahl, vorzugsweise 8 HART-Variablen, die als Eingangsparameter angegeben werden. Der Kanalbaustein arbeitet alle als Eingangsparameter angegebenen HART-Variablen sequentiell ab, indem er jeweils den aktuellen Wert der entsprechenden HART-Variablen aus dem mindestens einen Kommunikationsbereich von der Peripheriebaugruppe liest und an einem Ausgang bereitstellt. Die Ausgänge bleiben bis zum nächsten Lesen erhalten.

Vorzugsweise ist der Kanalbaustein kaskadierbar ausgeführt. Dabei hat jeder Baustein einen sogenannten Freigabeeingang (EN) und einen Freigabeausgang (ENO). Über EN und ENO können mehrere Bausteine miteinander verkettet werden, so dass die nachgelagerten Bausteine nur abgearbeitet werden können, wenn die Bausteine davor fehlerlos arbeiten.

Zur weiteren Erläuterung der Erfindung wird im Folgenden auf die Figuren der Zeichnung Bezug genommen. Es zeigen:
- Figur 1: einen Ausschnitt aus einem Prozessleitsystem mit einer Peripheriebaugruppe,
- Figur 2: ein Beispiel für die Belegung des Adressraumes in der Peripheriebaugruppe und
- Figur 3: ein Beispiel für einen kaskadierbaren Kanalbaustein.

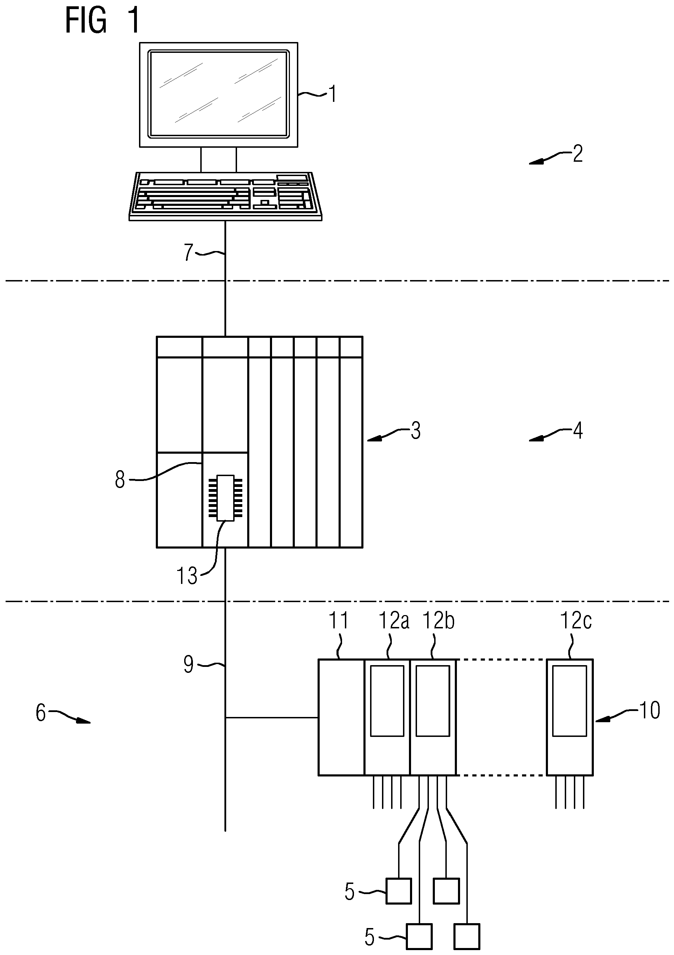

Figur 1 zeigt in schematischer Blockdarstellung einen Ausschnitt aus einem Prozessleitsystem mit einer Operatorstation 1 in einer Prozessführungsebene 2, einer speicherprogrammierbaren Steuerung (SPS) 3 in Steuerungsebene 4 und Feldgeräten 5 die auf Feldebene 6 Zustände eines technischen Prozesses erfassen (Sensoren) bzw. den Prozess gezielt beeinflussen (Aktoren). Die Operatorstation 1 und die speicherprogrammierbare Steuerung 3 sind über einen Anlagenbus 7 (z. B. Ethernet) miteinander verbunden. Die speicherprogrammierbare Steuerung 3 weist neben weiteren Baugruppen eine CPU-Einheit 8 auf, die ein Steuer- oder Anwenderprogramm abarbeitet und dabei über einen digitalen Feldbus 9 (z. B. PROFIBUS DP) erhaltene Eingangsdaten der Sensoren verarbeitet und Ausgangsdaten für die Aktoren erzeugt. Die Feldgeräte 5 sind über eine dezentrale Peripheriestation 10 an den digitalen Feldbus 9 angebunden. Die Peripheriestation 10 besteht aus einem Interfacemodul (Kopfbaugruppe) 11 zum Anschluss an den digitalen Feldbus 9 und einer Anzahl von Peripheriebaugruppen 12a, 12b, 12c. Wie am Beispiel einer dieser Peripheriebaugruppen 12b gezeigt, weisen diese jeweils mehrere, hier z. B. vier Kanäle auf, an denen jeweils eines der unterschiedlichen Feldgeräte 5 angeschlossen werden kann. Bei dem gezeigten Beispiel handelt es sich um HART-Feldgeräte und HART-Peripheriebaugruppen. In der CPU-Einheit 8 wird die Peripherieanbindung vorzugsweise durch einen oder mehrere Kanalbausteine (Treiber) 13 abstrahiert.

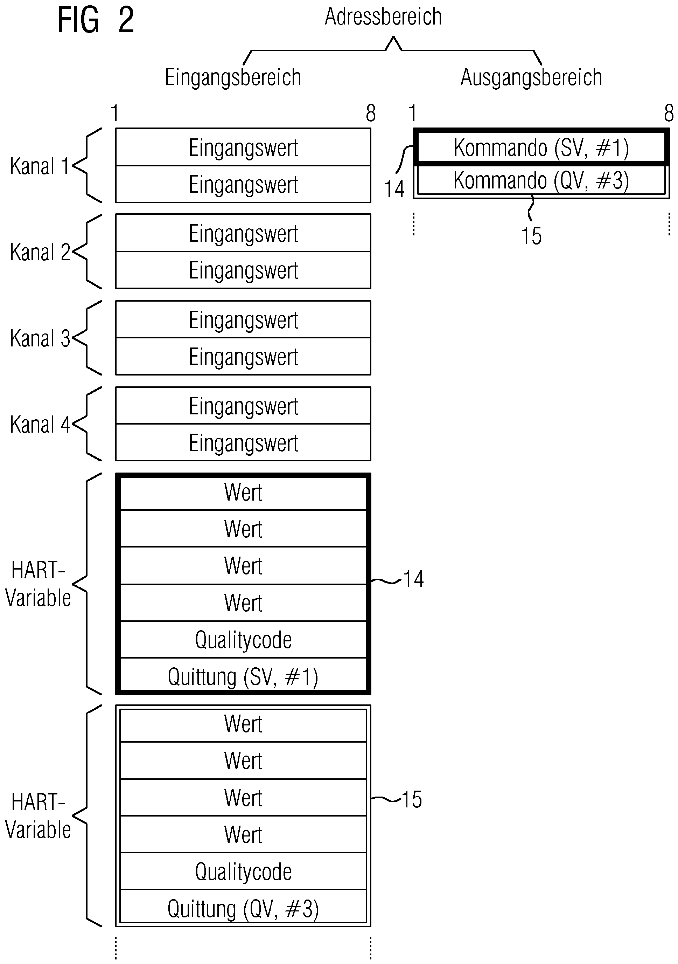

Figur 2 zeigt beispielhaft den Adressraum (Nutzdatenbereich) einer Peripheriebaugruppe, z. B. 12b, mit einem Eingangsbereich und einem Ausgangsbereich. In dem Eingangsbereich werden Eingangsdaten für die CPU-Einheit 8 bereitgestellt. Ausgangsdaten der CPU-Einheit 8 werden in den Ausgangsbereich geschrieben.

Die ersten 8 Bytes des Eingangsbereichs werden von den 4-20 mA-Haupt-Prozesswerten (Eingangswerte) beansprucht, die von den Feldgeräten 5 über die vier Kanäle erhalten und laufend aktualisiert werden.

Darüber hinaus ist in dem Ein- und Ausgangsbereich des Adressraums ein Kommunikationsbereich 14 für die Übertragung einer einzelnen HART-Variablen festgelegt. Dabei belegt die in dem Eingangsbereich des Kommunikationsbereichs 14 bereitgestellte HART-Variable 6 Bytes, davon 4 Byte für den Wert der HART-Variablen, 1 Byte Quality-Code und 1 Byte Quittung. Die Quittung beinhaltet, z. B. in den ersten 4 Bit, eine Kennzeichnung der zu lesenden HART-Variablen und, z. B. in den übrigen 4 Bit, die Kanalnummer des die HART-Variable liefernden Kanals der Peripheriebaugruppe 12b. Die Quittung entspricht sinnvollerweise dem Kommando, das von der CPU-Einheit 8 in den Ausgangsbereich des Kommunikationsbereichs 14 geschrieben wird, um die in dem Eingangsbereich bereitzustellende HART-Variable zu spezifizieren und anzufordern. Die in dem Eingangsbereich des Kommunikationsbereichs 14 bereitgestellte HART-Variable (d. h. ihr Wert) wird laufend von der Peripheriebaugruppe 12b aktualisiert und zusammen mit der sie kennzeichnenden Quittung zyklisch von der CPU-Einheit 8 gelesen, wobei sie zusammen mit weiteren HART-Variablen aus den anderen Peripheriebaugruppen 12a, 12c oder, wie noch erläutert wird, derselben Peripheriebaugruppe 12b in einem Telegramm über den digitalen Feldbus 9 übertragen wird. Die CPU-Einheit 8 liest die Werte der HART-Variablen zusammen mit den zugehörigen Quittungen. Die Quittungen werden durch ein Auswerteprogramm in der CPU, z. B. in dem Kanalbaustein 13, ausgewertet, so dass diese erkennt, ob die bereitgestellten HART-Variablen den angeforderten HART-Variablen entsprechen.

Wenn in den Ausgangsbereich des Kommunikationsbereichs 14 ein neues Kommando geschrieben wird, ändert die Peripheriebaugruppe 12b in dem Eingangsbereich die Quittung der durch das frühere Kommando spezifizierten bereitgestellten HART-Variablen auf einen vorgegebenen Wert, der die noch bereitgestellte HART-Variable so lange als ungültig kennzeichnet, bis diese durch die neue HART-Variable mit der zugehörigen Quittung ersetzt worden ist. Der Wert der neuen HART-Variablen wird laufend von der Peripheriebaugruppe 12b aktualisiert und zyklisch von der CPU-Einheit 8 gelesen, bis diese durch ein neues Kommando die Bereitstellung einer neuen HART-Variablen anfordert.

In der Peripheriebaugruppe 12b, wie auch in den anderen Peripheriebaugruppe 12a, 12c, können von jedem der an den Kanälen #1 bis #4 angeschlossenen Feldgeräte 5 jeweils bis zu vier unterschiedliche HART-Variablen (Primary Variable (PV), Secondary Variable (SV), Tertiary Variable (TV), Quaternary Variable (QV)) zur Verfügung gestellt werden. Bei dem gezeigten Beispiel wird aktuell in dem Kommunikationsbereich 14 die Secondary Variable (SV) aus dem Kanal #1 bereitgestellt.

Bei dem dargestellten Ausführungsbeispiel ist in dem Ein- und Ausgangsbereich des Adressraums der Peripheriebaugruppe 12b ein weiterer Kommunikationsbereich 15 für die Übertragung einer weiteren HART-Variablen festgelegt, so dass zwei unabhängig voneinander durch Kommandos spezifizierte HART-Variablen parallel bzw. gleichzeitig bereitgestellt werden. Im gezeigten Beispiel sind dies aktuell die bereits erwähnte Secondary Variable (SV) aus dem Kanal #1 und die Quaternary Variable (QV) aus dem Kanal #3. Über die beiden Kommunikationsbereiche 14, 15 können alle HART-Variablen der Peripheriebaugruppe 12b unabhängig voneinander gelesen werden, davon jeweils zwei HART-Variablen gleichzeitig.

Lediglich die Länge des für die Übertragung auf dem digitalen Feldbus 9 vorgesehenen Telegramms beschränkt die Anzahl der HART-Variablen, die aus allen Peripheriebaugruppen 12a, 12b, 12c gleichzeitig gelesen werden können.

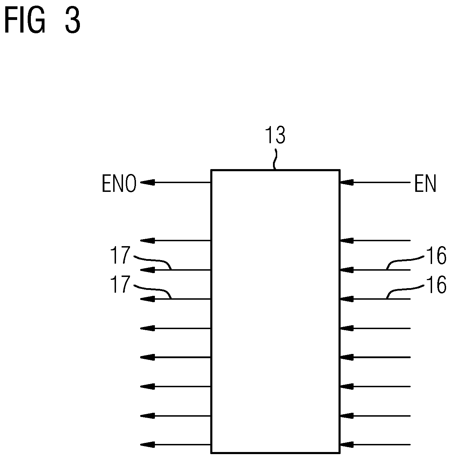

Figur 3 zeigt ein Beispiel für den mindestens einen kaskadierbaren Kanalbaustein 13 in der CPU-Einheit 8. Der Kanalbaustein 13 repräsentiert acht unterschiedliche HART-Variablen, die als Eingangsparameter angegeben werden. Der Kanalbaustein 13 arbeitet an seinen acht Eingängen 16 die als Eingangsparameter angegebenen HART-Variablen sequentiell ab, indem er jeweils den aktuellen Wert der entsprechenden HART-Variablen aus dem Kommunikationsbereich 14 oder 15 von der betreffenden Peripheriebaugruppe 12a, 12b, 12c liest und an einem Ausgang 17 bereitstellt. Die Ausgänge 17 bleiben bis zum nächsten Lesen erhalten.

Über einen Freigabeeingang EN kann die Abarbeitung des Kanalbausteins 13 an ein Freigabesignal geknüpft werden. Der Baustein 13 wird dann nur abgearbeitet, wenn dieses Signal den Wert "1" aufweist. Nach dem Aufruf des Bausteins 13 wird an einem Freigabeausgang ENO das Signal "1" geführt. Im Falle einer fehlerhaften Abarbeitung wird dagegen das Signal "0" an dem Freigabeausgang ENO geführt. Dies ist z. B. dann der Fall, wenn der Kanalbaustein 13 bei der Auswertung der Quittung einer gelesenen HART-Variablen erkennt, dass diese nicht der angeforderten HART-Variablen entspricht. Über den Freigabeeingang EN und Freigabeausgang ENO können also mehrere Bausteine kaskadiert werden, so dass die jeweils nachgelagerten Bausteine nur abgearbeitet werden können, wenn die Bausteine davor fehlerlos arbeiten.

## Patentansprüche

1. Verfahren zur Übertragung unterschiedlicher HART-Variablen aus einer zum Anschluss von HART-Feldgeräten (5) dienenden Peripheriebaugruppe (12a, 12b, 12c) in eine CPU-Einheit (8) einer speicherprogrammierbaren Steuerung (3), wobei die Peripheriebaugruppe (12a, 12b, 12c) einen Adressraum mit einem Eingangsbereich und einem Ausgangsbereich aufweist und in dem Eingangsbereich die HART-Variablen bereitstellt, welche von der Peripheriebaugruppe (12a, 12b, 12c) laufend aktualisiert und von der CPU-Einheit (8) zyklisch gelesen werden, **dadurch gekennzeichnet, dass** in dem Ein- und Ausgangsbereich des Adressraums ein Kommunikationsbereich (14) für die Übertragung einer einzelnen HART-Variablen vorgesehen wird, wobei die CPU-Einheit (8) in den Ausgangsbereich des Kommunikationsbereichs (14) ein Kommando schreibt, das die aktuell zu lesende HART-Variable spezifiziert, und dass die Peripheriebaugruppe (12a, 12b, 12c) die spezifizierte HART-Variable solange in dem Eingangsbereich des Kommunikationsbereichs (14) bereitstellt und aktualisiert, bis die CPU-Einheit (8) in den Ausgangsbereich ein neues Kommando schreibt, welches eine andere zu lesende HART-Variable spezifiziert.

2. Verfahren nach Anspruch 1, **dadurch gekennzeichnet, dass** bei mehrkanaliger Ausbildung der Peripheriebaugruppe (12a, 12b, 12c) zum Anschluss mehrerer HART-Feldgeräte (5) die Spezifikation der jeweils zu lesenden HART-Variablen auch den Kanal angibt, der diese HART-Variable liefert.

3. Verfahren nach Anspruch 1 oder 2, **dadurch gekennzeichnet, dass** die jeweils zu lesende HART-Variable in dem Eingangsbereich zusammen mit einer dem Kommando entsprechenden Quittung bereitgestellt wird.

4. Verfahren nach einem der vorhergehenden Ansprüche, **dadurch gekennzeichnet, dass** in dem Ein- und Ausgangsbereich des Adressraums der Peripheriebaugruppe (12a, 12b, 12c) mindestens ein weiterer Kommunikationsbereich (15) für die Übertragung einer weiteren HART-Variablen vorgesehen wird, so dass in den mindestens zwei Kommunikationsbereichen (14, 15) unabhängig voneinander durch Kommandos spezifizierte HART-Variablen parallel bereitgestellt werden.

5. Verfahren nach einem der vorhergehenden Ansprüche, **dadurch gekennzeichnet, dass** die zu lesenden HART-Variablen von der CPU-Einheit (8) über Eingänge (16) mindestens eines Kanalbausteins (13) eingelesen und an Ausgängen (17) bereitgestellt werden, wobei der Kanalbaustein (13) eine vorgegebene Anzahl unterschiedlicher HART-Variablen repräsentiert, die als Eingangsparameter angegeben werden und die sequentiell abgearbeitet werden, indem jeweils der aktuelle Wert der entsprechenden HART-Variablen aus dem Kommunikationsbereich (14, 15) der betreffenden Peripheriebaugruppe (12a, 12b, 12c) gelesen und an dem Ausgang (17) bis zum nächsten Lesen bereitstellt wird.

6. Peripheriebaugruppe (12a, 12b, 12c) zum Anschluss von HART-Feldgeräten (5) und zur Übertragung unterschiedlicher HART-Variablen in eine CPU-Einheit (8) einer speicherprogrammierbaren Steuerung (3), wobei die Peripheriebaugruppe (12a, 12b, 12c) einen Adressraum mit einem Eingangsbereich und einem Ausgangsbereich aufweist und dazu ausgebildet ist, die HART-Variablen in dem Eingangsbereich eines Adressraumes zum zyklischen Lesen durch die CPU-Einheit (8) bereitzustellen und laufend zu aktualisieren, **dadurch gekennzeichnet, dass** in dem Ein- und Ausgangsbereich des Adressraums ein Kommunikationsbereich (14) für die Übertragung einer einzelnen HART-Variablen vorgesehen ist und dass die Peripheriebaugruppe (12a, 12b, 12c) ferner dazu ausgebildet ist, in dem Ausgangsbereich des Kommunikationsbereichs (14) ein die aktuell zu lesende HART-Variable spezifizierendes Kommando der CPU-Einheit (8) zu empfangen und die jeweils spezifizierte HART-Variable solange in dem Eingangsbereich des Kommunikationsbereichs (14) bereitzustellen und zu aktualisieren, bis sie in dem Ausgangsbereich ein neues Kommando empfängt, welches eine andere zu lesenden HART-Variable spezifiziert.

7. Peripheriebaugruppe (12a, 12b, 12c) nach Anspruch 6, **dadurch gekennzeichnet, dass** sie mehrere Kanäle zum Anschluss mehrerer HART-Feldgeräte (5) aufweist und dass die Spezifikation der jeweils zu lesenden HART-Variablen auch den Kanal angibt, der diese HART-Variable liefert.

8. Peripheriebaugruppe (12a, 12b, 12c) nach Anspruch 6 oder 7, **dadurch gekennzeichnet, dass** sie dazu ausgebildet ist, die jeweils zu lesende HART-Variable in dem Eingangsbereich zusammen mit einer dem Kommando entsprechenden Quittung bereitzustellen.

9. Peripheriebaugruppe (12a, 12b, 12c) nach einem der Ansprüche 6 bis 8, **dadurch gekennzeichnet, dass** in dem Ein- und Ausgangsbereich ihres Adressraums mindestens ein weiterer Kommunikationsbereich (15) für die Übertragung einer weiteren HART-Variablen vorgesehen ist, so dass in den mindestens zwei Kommunikationsbereichen (14, 15) unabhängig voneinander durch Kommandos spezifizierte HART-Variablen parallel bereitgestellt werden.

10. CPU-Einheit (8) einer speicherprogrammierbaren Steuerung (3), die zum Lesen von HART-Variablen einer Peripheriebaugruppe nach einem der Ansprüche 6 bis 8 ausgebildet ist und mindestens einen Kanalbaustein (13) enthält, der eine vorgegebene Anzahl unterschiedlicher HART-Variablen repräsentiert und eine entsprechende Anzahl von Eingängen (16) und Ausgängen (17) aufweist, wobei die HART-Variablen als Eingangsparameter vorgebbar sind und von dem Kanalbaustein (13) sequentiell abgearbeitet werden, indem jeweils der aktuelle Wert der entsprechenden HART-Variablen aus dem Kommunikationsbereich (14, 15) der betreffenden Peripheriebaugruppe (12a, 12b, 12c) gelesen und an dem Ausgang (17) bis zum nächsten Lesen bereitstellt wird.

11. CPU-Einheit (8) nach Anspruch 10, **dadurch gekennzeichnet, dass** der Kanalbaustein (13) acht Eingänge (16) und acht Ausgänge (17) aufweist.

12. CPU-Einheit (8) nach Anspruch 10 oder 11, **dadurch gekennzeichnet, dass** der Kanalbaustein (13) einen Freigabeeingang (EN) und einen Freigabeausgang (ENO) aufweist, über die er mit weiteren Bausteinen kaskadierbar ist.

## Claims

1. Method for transmission of different HART variables from a peripheral module (12a, 12b, 12c) used for connection of HART field devices (5) into a CPU unit (8) of a programmable logic controller (3), wherein the peripheral module (12a, 12b, 12c) has an address space with an input area and an output area and in the input area provides the HART variables, which are continuously updated by the peripheral module (12a, 12b, 12c) and are cyclically read by the CPU unit (8), **characterised in that** a communication area (14) for the transmission of an individual HART variable is provided in the input and output area of the address space, wherein the CPU unit (8) writes a command, which specifies the HART variable currently to be read, into the output area of the communication area (14), and that the peripheral module (12a, 12b, 12c) provides and updates the specified HART variable in the input area of the communication area (14) until such time as the CPU unit (8) writes a new command, which specifies another HART variable to be read, into the output area.

2. Method according to claim 1, **characterised in that**, with a multi-channel embodiment of the peripheral module (12a, 12b, 12c) for connection of a number of HART field devices (5), the specification of the HART variable to be read in each case also specifies the channel that is delivering this HART variable.

3. Method according to claim 1 or 2, **characterised in that** the HART variable to be read in each case is provided in the input area together with an acknowledgement corresponding to the command.

4. Method according to one of the preceding claims, **characterised in that** at least one further communication area (15) for the transmission of a further HART variable is provided in the input and output area of the address space of the peripheral module (12a, 12b, 12c), so that HART variables specified by commands can be provided independently of one another in parallel in the at least two communication areas (14, 15).

5. Method according to one of the preceding claims, **characterised in that** the HART variables to be read are read in by the CPU unit (8) via inputs (16) of at least one channel block (13) and are provided at outputs (17), wherein the channel block (13) represents a predetermined number of different HART variables that are specified as input parameters and that are processed sequentially, **in that** in each case the current value of the corresponding HART variable is read from the communication area (14, 15) of the peripheral module (12a, 12b, 12c) concerned and is provided at the output (17) until the next read.

6. Peripheral module (12a, 12b, 12c) for connection of HART field devices (5) and for transmission of different HART variables into a CPU unit (8) of a programmable logic controller (3), wherein the peripheral module (12a, 12b, 12c) has an address space with an input area and an output area and is embodied to provide the HART variables in the input area of an address space for cyclical reading by the CPU unit (8) and to update them continuously, **characterised in that** a communication area (14) for the transmission of an individual HART variable is provided in the input and output area of the address space and that the peripheral module (12a, 12b, 12c) is further embodied to receive in the output area of the communication area (14) a command of the CPU unit (8) specifying the HART variable currently to be read and to provide and update the HART variable specified in each case in the input area of the communication area (14) until such time as it receives a new command, which specifies another HART variable to be read, in the output area.

7. Peripheral module (12a, 12b, 12c) according to claim 6, **characterised in that** it has a number of channels for connection of a number of HART field devices (5) and that the specification of the HART variable to be read in each case also specifies the channel that is delivering this HART variable.

8. Peripheral module (12a, 12b, 12c) according to claim 6 or 7, **characterised in that** it is embodied to provide the HART variable to be read in each case in the input area together with an acknowledgement corresponding to the command.

9. Peripheral module (12a, 12b, 12c) according to one of claims 6 to 8, **characterised in that** at least one further communication area (15) for the transmission of a further HART variable is provided in the input and output area of its address space, so that HART variables specified by commands can be provided independently of one another in parallel in the at least two communication areas (14, 15).

10. CPU unit (8) of a programmable logic controller (3), which is embodied for reading HART variables of a peripheral module according to one of claims 6 to 8 and contains at least one channel block (13) that represents a predetermined number of different HART variables and has a corresponding number of inputs (16) and outputs (17), wherein the HART variables are able to be predetermined as input parameters and are processed sequentially by the channel block (13), in that in each case the current value of the corresponding HART variable is read from the communication area (14, 15) of the peripheral module (12a, 12b, 12c) concerned and is provided at the output (17) until the next read.

11. CPU unit (8) according to claim 10, **characterised in that** the channel block (13) has eight inputs (16) and eight outputs (17).

12. CPU unit (8) according to claim 10 or 11, **characterised in that** the channel block (13) has an enabling input (EN) and an enabling output (ENO), via which it is able to be cascaded with further blocks.

## Revendications

1. Procédé de transmission de variables HART différentes d'un module (12a, 12b, 12c) périphérique servant à raccorder des appareils (5) HART sur site à une unité (8) CPU d'un automate (3) programmable, le module (12a, 12b, 12c) périphérique ayant un espace d'adresse à partie d'entrée et à partie de sortie et mettant dans la partie d'entrée les variables HART, qui sont mises à jour en permanence par le module (12a, 12b, 12c) périphérique et qui sont lues cycliquement par l'unité (8) CPU, **caractérisé en ce qu'**il est prévu, dans la partie d'entrée et dans la partie de sortie de l'espace d'adresse, une partie (14) de communication pour la transmission d'une variable HART individuelle, l'unité CPU écrivant, dans la partie de sortie de la partie (14) de communication, une instruction, qui spécifie la variable HART à lire présentement, et **en ce que** le module (12a, 12b, 12c) périphérique met à disposition et met à jour la variable HART spécifiée dans la partie d'entrée de la partie (14) de communication jusqu'à ce que l'unité (8) CPU écrive dans la partie de sortie une instruction nouvelle, qui spécifie une autre variable HART à lire.

2. Procédé suivant la revendication 1, **caractérisé en ce que**, si le module (12a, 12b, 12c) périphérique est constitué en ayant plusieurs canaux pour le raccordement de plusieurs appareils (5) HART sur site, la spécification des variables HART à lire indique également le canal qui fournit cette variable HART.

3. Procédé suivant la revendication 1 ou 2, **caractérisé en ce que** l'on met la variable HART à lire à disposition dans la partie d'entrée, ensemble avec un accusé de réception correspondant à l'instruction.

4. Procédé suivant l'une des revendications précédentes, **caractérisé en ce qu'**on prévoit, dans la partie d'entrée et dans la partie de sortie de l'espace d'adresse du module (12a, 12b, 12c) périphérique, au moins une autre partie (15) de communication pour la transmission d'une autre variable HART, de manière à mettre à disposition en parallèle, dans les au moins deux parties (14, 15) de communication indépendamment de l'autre, des variables HART spécifiées par des instructions.

5. Procédé suivant l'une des revendications précédentes, **caractérisé en ce qu'**on lit les variables HART à lire de l'unité (8) CPU par des entrées (16) d'au moins un module (13) de canal et on les met à disposition à des sorties (17), le module (13) de canal représentant un nombre donné à l'avance de variables HART différentes, qui sont indiquées comme paramètres d'entrée et qui sont élaborées séquentiellement par le fait qu'on lit la valeur présente des variables HART correspondantes dans la partie (14, 15) de communication du module (12a, 12b, 12c) périphérique concerné et qu'on la met à disposition à la sortie (17) jusqu'à la lecture suivante.

6. Module (12a, 12b, 12c) périphérique de raccordement d'appareils (5) HART sur site et de transmission de variables HART différentes à une unité (8) CPU d'un automate (3) programmable, les modules (12a, 12b, 12c) périphériques ayant un espace d'adresse à partie d'entrée et à partie de sortie et étant constitués pour mettre à disposition les variables HART dans la partie d'entrée d'un espace d'adresse pour la lecture cyclique par l'unité (8) CPU et à les mettre à jour en continu, **caractérisé en ce qu'**il est prévu, dans la partie d'entrée et dans la partie de sortie de l'espace d'adresse, une partie (14) de communication pour la transmission d'une variable HART individuelle et **en ce que** le module (12a, 12b, 12c) périphérique est constitué, en outre, pour recevoir, dans la partie de sortie de la partie (14) de communication, une instruction spécifiant la variable HART à lire présentement de l'unité (8) CPU et pour mettre la variable HART spécifiée à disposition dans la partie d'entrée de la partie (14) de communication et la mettre à jour, jusqu'à réception dans la partie de sortie d'une instruction nouvelle, qui spécifie une autre variable HART à lire.

7. Module (12a, 12b, 12c) périphérique suivant la revendication 6, **caractérisé en ce qu'**il a plusieurs canaux de raccordement de plusieurs appareils (5) HART sur site et **en ce que** la spécification des variables HART à lire indique aussi le canal qui fournit cette variable HART.

8. Module (12a, 12b, 12c) périphérique suivant la revendication 6 ou 7, **caractérisé en ce qu'**il est constitué pour mettre à disposition la variable HART à lire dans la partie d'entrée ensemble avec un accusé de réception correspondant à l'instruction.

9. Module (12a, 12b, 12c) périphérique suivant l'une des revendications 6 à 8, **caractérisé en ce qu'**on prévoit, dans la partie d'entrée et dans la partie de sortie de l'espace d'adresse du module (12a, 12b, 12c) périphérique, au moins une autre partie (15) de communication pour la transmission d'une autre variable HART, de manière à mettre à disposition en parallèle, dans les au moins deux parties (14, 15) de communication indépendamment l'une de l'autre, des variables HART spécifiées par des instructions.

10. Unité (8) CPU d'un automate (3) programmable constituée pour lire des variables HART d'un module périphérique suivant l'une des revendications 6 à 8 et qui comporte au moins un module (13) de canal, qui représente un nombre donné à l'avance de variables HART différentes et qui a un nombre correspondant d'entrées (16) et de sorties (17), les variables HART pouvant être prescrites comme paramètres d'entrée et pouvant être élaborées séquentiellement par le module (13) de canal, par le fait que la valeur présente des variables HART correspondantes est lue dans la partie (14, 15) de communication du module (12a, 12b, 12c) périphérique concerné et est mise à disposition sur la sortie (17) jusqu'à la lecture suivante.

11. Unité (8) CPU suivant la revendication 10, **caractérisée en ce que** le module (13) de canal a huit entrées (16) et huit sorties (17).

12. Unité (8) CPU suivant la revendication 10 ou 11, **caractérisée en ce que** le module (13) de canal a une entrée (EN) de libération et une sortie (ENO) de libération, par lesquelles il peut être mis en cascade avec d'autres modules.
